# FASCICULE DE BREVET EUROPEEN

(11) **EP 2 058 194 B1**
(45) Date de publication et mention de la délivrance du brevet: **18.08.2010**
(21) Numéro de dépôt: 08019346.9
(22) Date de dépôt: 05.11.2008
(51) Int. Cl.: B60T 13/565, B60T 13/573

(54) **Servomoteur d' assistance au freinage rapide pour vehicule automobile**
Bremskraftverstärker zur Schnellbremsung für Kraftfahrzeug
Brake booster for quick braking assistance for an automobile

(30) Priorité: 06.11.2007 FR 0707810
(43) Date de publication de la demande: 13.05.2009
(73) Titulaire: Robert Bosch GmbH, 70442 Stuttgart (DE)
(72) Inventeur: Attard, Jean-Marc M., 60340 Villers sous St Leu (FR)
(74) Mandataire: Hurwic, Aleksander Wiktor

(56) Documents cités:
- FR-A- 2 782 044
- FR-A- 2 844 764
- FR-A- 2 856 363

## Description

L'invention se rapporte à un servomoteur d'assistance au freinage et plus particulièrement un servomoteur d'assistance au freinage d'actionnement rapide applicable notamment dans un véhicule automobile.

Dans les systèmes de freinage automobile, il existe généralement une course morte perceptible au début d'un freinage lors de l'actionnement de la pédale de frein durant laquelle le conducteur appuie sur la pédale de frein sans qu'une pression hydraulique soit induite de façon efficace dans le circuit de freinage du véhicule.

Il existe des systèmes permettant de réduire cette course morte. C'est le cas, par exemple du système décrit dans la demande de brevet français n° FR2856363.

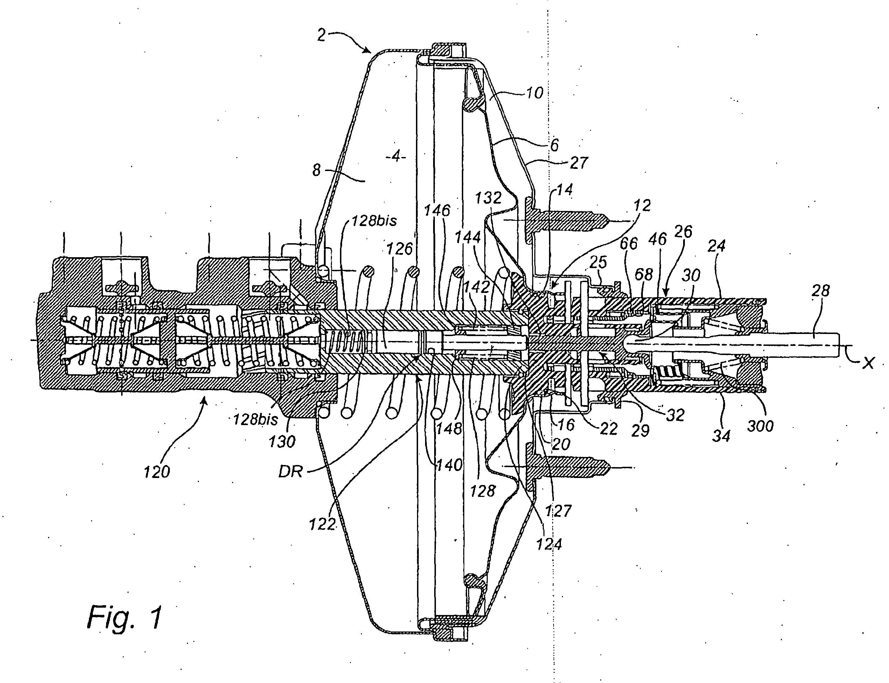

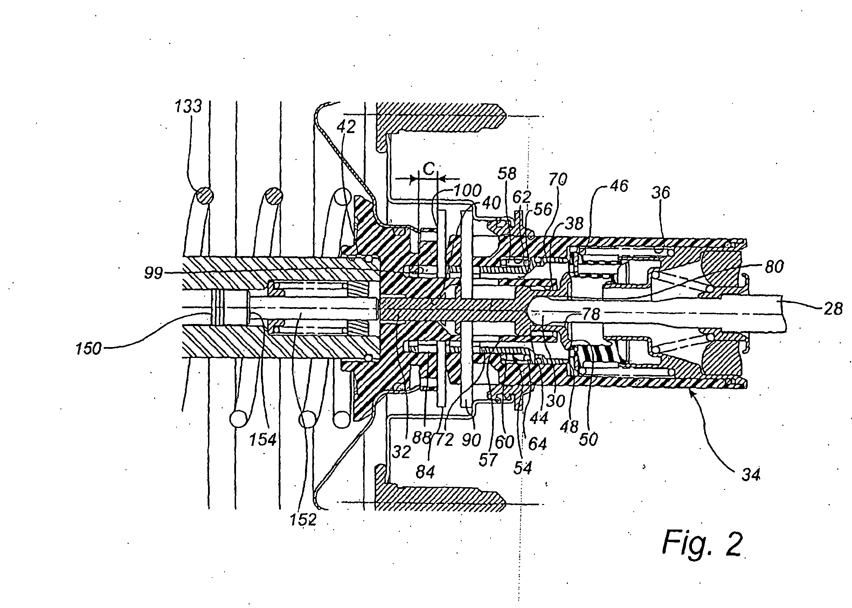

Ce système comporte, comme cela est représenté en figures 1 et 2:
- un boîtier 2, d'axe longitudinal X, contenant une jupe 6 montée à coulissement axial étanche dans le boîtier et délimitant une première chambre 8 à basse pression appelée chambre avant et une deuxième chambre 10 à pression variable appelée chambre arrière,
- un piston 12 solidaire de la jupe 6,
- une vanne trois voies 26 permettant, sous la commande d'une tige de commande 28, d'isoler l'une de l'autre les chambres avant et arrière, de les mettre en communication entre elles ou de mettre la chambre arrière à une pression élevée par rapport à la basse pression telle que la pression atmosphérique,
- une douille 54 coulissant axialement à l'intérieur du piston 12, une face annulaire 48 de cette douille tenant lieu de premier siège de clapet, appelé siège d'équilibrage, pour la vanne trois voies 26,
- un distributeur-plongeur 32 possédant une face annulaire 50 tenant lieu de deuxième siège de clapet, appelé siège de clapet d'admission, pour la vanne trois voies 26,
- une clé 84 traversant perpendiculairement à l'axe X deux ouvertures diamétralement opposées 86 du piston et deux lumières diamétralement opposées 88 de la douille 54. La clé 84 est montée fixe dans le piston pneumatique 12.

Le fonctionnement d'un tel servomoteur est le suivant:
En position de repos (figures 1 et 2), le clapet 46 est décollé du premier siège de clapet ou clapet d'équilibrage 48 (porté par la douille 54) et met en communication la chambre avant 8 avec la chambre arrière 10. Le clapet 46 est en appui sur le deuxième siège de clapet d'admission 50 isolant ainsi la chambre arrière de la pression atmosphérique.

Au début d'une phase de freinage, lorsque le conducteur appuie sur la pédale de frein, la tige de commande 28 est déplacée axialement vers l'avant, le clapet 46 vient alors en application sur le premier siège de clapet 48 isolant la chambre arrière de la chambre avant et se décolle du deuxième siège 50 et autorisant une alimentation en air à pression atmosphérique dans la chambre arrière. Du fait de la différence de pressions entre la chambre avant et la chambre arrière, la jupe 6 et le piston 12 sont déplacés vers l'avant. Le premier siège de clapet 48 porté par la douille 54 est immobile tant que le jeu C entre la clé 84 et l'extrémité avant des deuxièmes lumières 88 n'est pas rattrapé.

Le ressort 58 maintient la douille 54 dans une position axiale déterminée par rapport au boîtier du servomoteur tant que le piston 12 n'a pas parcouru une course déterminée C (figure 2). Le piston hydraulique du maître-cylindre est poussé par le piston pneumatique, qui emporte lui-même le piston auxiliaire 126 qui s'éloigne du palpeur. Au delà d'une pression déterminée dans le maître -cylindre suffisante pour que le piston auxiliaire 126 puisse vaincre le ressort de saut 138, le piston auxiliaire est repoussé en direction du palpeur jusqu'à venir en contact avec celui-ci et retransmet alors la réaction du circuit hydraulique à la pédale de frein.

Lorsque le piston pneumatique 12 a parcouru la course C (voir figure 2), la face avant 100 de la clé 84 fixe par rapport au piston pneumatique vient en appui de l'extrémité avant des lumières 88 de la douille. La douille est alors liée axialement au déplacement du piston. Le clapet 46 vient en contact du siège de clapet d'admission 50 et interrompt l'alimentation en air à pression atmosphérique de la chambre arrière. Le conducteur doit alors enfoncer davantage la pédale de frein pour augmenter le niveau de freinage.

La course C est choisie préférentiellement de manière à ce qu'elle corresponde à la course morte du maitre-cylindre, c'est-à-dire à la course nécessaire du piston hydraulique dans le maitre-cylindre pour obtenir le début de la montée en pression du liquide de frein dans les freins. Par conséquent, le conducteur ne ressent à la pédale que la course nécessaire à la fermeture du clapet d'équilibrage et à l'ouverture du clapet d'admission et ne ressent pas la course morte du maître-cylindre. Le confort du conducteur est alors augmenté, puisqu'il a la sensation d'un freinage immédiat.

Ensuite, le système entre dans la phase de freinage proprement dite.

Dans un tel système, on constate la nécessité d'un pic d'effort à appliquer à la pédale lorsque la clé 84 a parcouru la course C et qu'elle entre en contact avec l'extrémité avant des lumières 88 de la douille 54. L'objet de l'invention est d'atténuer cette transition qui est perceptible à la pédale de frein.

L'invention a donc pour objet un servomoteur d'assistance au freinage qui comporte:
- un boîtier d'axe longitudinal déterminé,
- un ensemble jupe et piston pneumatique monté à coulissement étanche dans le boîtier selon l'axe longitudinal, ledit ensemble jupe et piston divisant l'espace intérieur du boîtier en une chambre avant à basse pression et en une chambre arrière à pression variable,
- une vanne trois voies actionnée par une tige de commande montée dans un passage longitudinal percé dans le piston pneumatique, ladite tige de commande étant reliée par une première extrémité longitudinale à une pédale de frein,
- un distributeur-plongeur mobile, dans ledit piston selon ledit axe longitudinal sous la commande d'une deuxième extrémité de ladite tige de commande, ledit distributeur plongeur permettant d'appliquer l'effort de la tige de commande à un piston hydraulique d'un maître-cylindre, ledit ensemble jupe et piston transmettant un effort d'assistance pneumatique au piston hydraulique du maître-cylindre,
- une douille montée à coulissement étanche dans le piston pneumatique selon ledit axe longitudinal sur une première course déterminée.

La vanne trois voies comporte un premier et un deuxième siège de clapet, ainsi qu'un clapet destiné à être appliqué contre le premier et/ou le deuxième siège de clapet. Le premier siège de clapet est porté par une première extrémité longitudinale de la douille. Le deuxième siège de clapet est porté par une première extrémité longitudinale du distributeur-plongeur.

Selon l'invention, le servomoteur comporte également:
- un dispositif élastique prenant appui d'une part sur une face avant du piston et, d'autre part sur un épaulement de la douille. Ce dispositif élastique a pour action de tendre à exercer sur la douille un effort vers l'avant par rapport au piston,
- un dispositif de transmission de la pression du maître cylindre à la douille qui a pour action de tendre à exercer sur la douille un effort vers l'arrière.

On prévoira avantageusement que le dispositif élastique comporte un premier ressort.

Selon une forme de réalisation préférée de l'invention, le dispositif de transmission de la pression du maître cylindre comporte un piston auxiliaire coaxial avec le piston primaire du maître cylindre. Ce piston auxiliaire est destiné à exercer un effort sur la douille par l'intermédiaire du dispositif de transmission de la pression du maître cylindre. Avantageusement, ce dispositif de transmission comporte un deuxième ressort.

On pourra prévoir, selon cette forme de réalisation que le deuxième ressort est compris entre une première rondelle qui prend appui sur un épaulement du piston auxiliaire et une deuxième rondelle qui prend appui sur un épaulement avant de la douille.

"Par ailleurs, selon l'invention, on prévoit des moyens limitant le déplacement de la douille par rapport au piston pneumatique. Dans ce contexte, le piston pneumatique peut comporter alors un épaulement de butée et en ce que la douille comporte une pièce de limitation de course destinée à venir en butée contre ledit épaulement de butée pour limiter le déplacement de la douille à l'intérieur du piston du servomoteur.

On pourra également prévoir que la position de la pièce de limitation de course sur la douille est réglable axialement.

Par ailleurs, il peut être également prévu une pièce d'appui qui prend appui sur le boîtier du servomoteur et qui possède une première partie qui pénètre dans une ouverture du piston pneumatique et sur laquelle ce piston est destiné à s'appuyer, ainsi qu'une deuxième partie qui pénètre dans une ouverture de la douille et qui est destinée à limiter le déplacement vers l'avant de la douille lorsque le servomoteur est au repos.

Avantageusement, la charge du premier ressort est plus faible que la charge du deuxième ressort.

Les différents objets et caractéristiques de l'invention apparaîtront plus clairement dans la description qui va suivre et dans les figures annexées qui représentent:
- la figure 1, un servomoteur d'assistance au freinage de type connu dans la technique et déjà décrit précédemment,
- la figure 2, une vue plus détaillée du servomoteur d'assistance au freinage de la figure 1 et également décrite précédemment,
- la figure 3, un exemple de réalisation du dispositif selon l'invention appliqué à un servomoteur pneumatique d'assistance au freinage,
- la figure 4, une vue agrandie du dispositif selon l'invention de la figure 3,

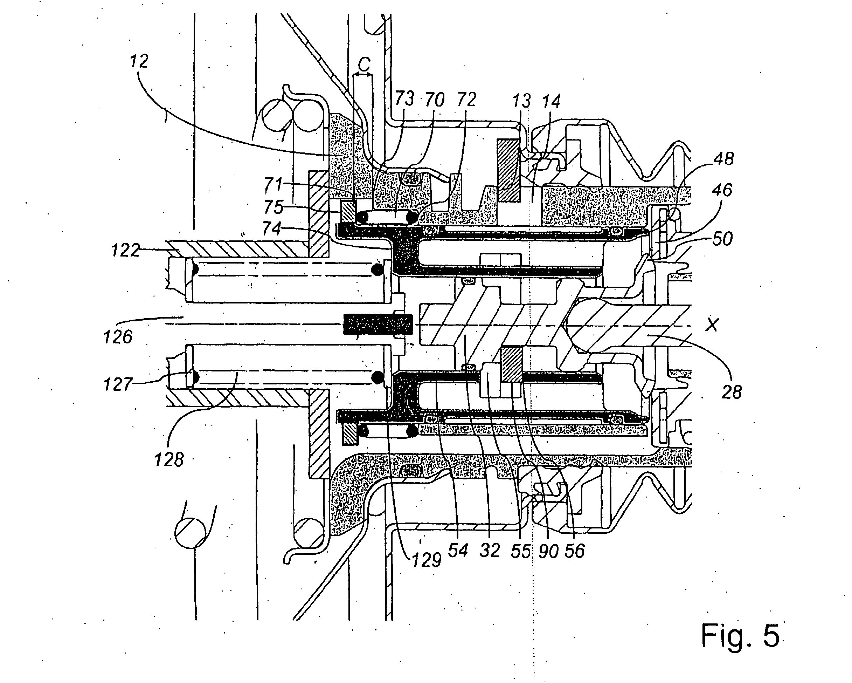

- la figure 5, une variante de réalisation du dispositif de la figure 4.

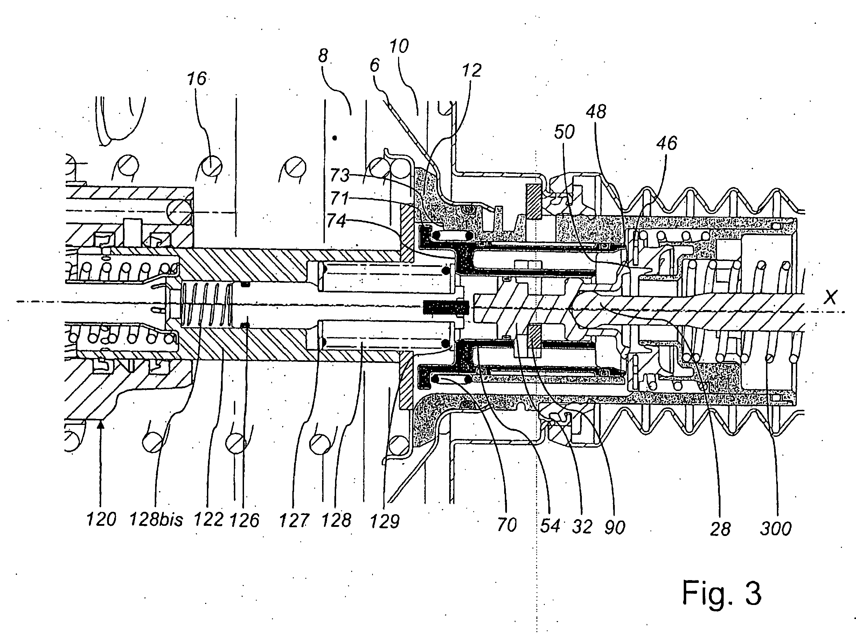

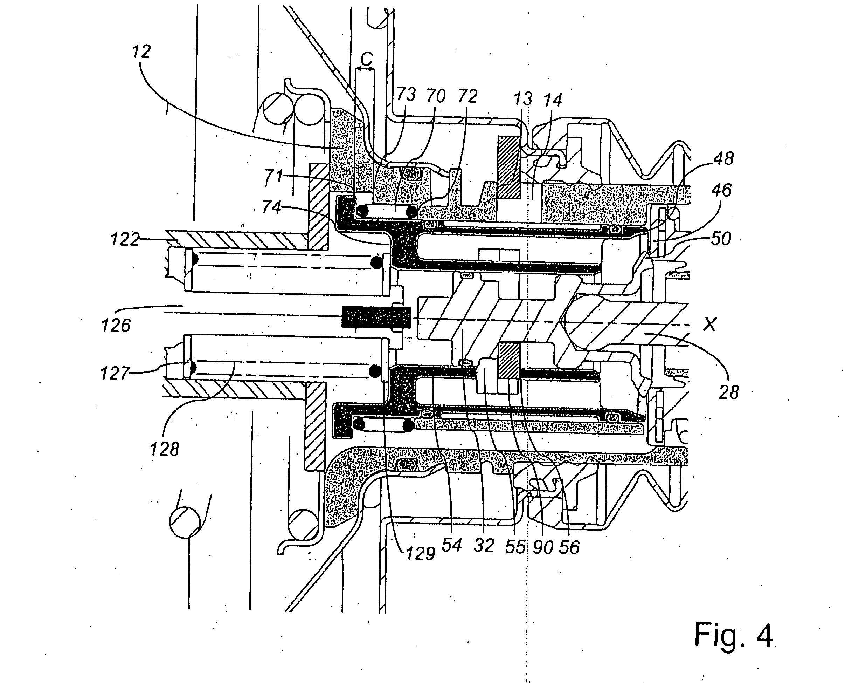

En se reportant aux figures 3 et 4, on va donc décrire un exemple de réalisation du dispositif de l'invention.

Ce dispositif s'applique à un servomoteur d'assistance au freinage tel que celui de la figure 1. Sur ces figures 3, on n'a représenté que la partie du servomoteur contenant le dispositif de l'invention. Les composants représentés sur les figures 3 et 4 portent les mêmes références que les composants des figures 1 et 2 qui assurent les mêmes fonctions.

La description du dispositif des figures 3 et 4 va donc être faite en liaison avec la figure du servomoteur d'assistance au freinage de la figure 1.

Sur la figure 3, on retrouve donc représenté partiellement, le boîtier du servomoteur dans lequel une jupe 6 délimite une chambre avant (basse pression) 8 et une chambre arrière 10 susceptible d'être mise soit à la pression de la chambre avant soit à la pression atmosphérique.

Un piston pneumatique 12 est solidaire de la jupe et coulisse selon l'axe X du servomoteur.

A l'intérieur du piston 12, une douille 54 coulisse axialement.

A l'intérieur de la douille, un distributeur-plongeur 32 coulisse axialement sous la commande d'une tige de commande 28 commandée par une pédale de frein non représentée.

Par ailleurs, une vanne trois voies situées à l'intérieur du piston 12 permet soit de mettre en communication la chambre avant 8 et la chambre arrière 10, soit de mettre la chambre arrière à la pression atmosphérique, soit d'isoler la chambre arrière. Pour cela, comme cela est mieux visible sur la figure 4, la vanne trois voies comporte un clapet 46 de forme annulaire susceptible d'être en contact soit avec un siège de clapet d'équilibrage 48 porté par une extrémité annulaire de la douille 54, soit avec un siège de clapet d'admission 50 porté par une extrémité annulaire du distributeur-plongeur 32.

Selon l'invention, la douille 54 est normalement poussée vers l'avant (vers la gauche sur les figures 3 et 4) par un ressort 70.

Le ressort 70 prend appui, d'un côté, sur la face arrière d'un épaulement 71 situé à l'avant de la douille 54, et d'un autre côté, sur la face 72 avant d'un épaulement du piston 12. Le ressort 70 a donc tendance à repousser la douille 54 vers l'avant (vers la gauche sur les figures) de telle façon que le siège de clapet 48 ait tendance à s'éloigner du clapet 46.

Par ailleurs, le piston auxiliaire 126 est capable d'exercer une force de l'avant vers l'arrière sur la douille 54. Cette force est exercée par l'intermédiaire d'un dispositif élastique comportant, par exemple, un ressort 128bis compris entre les pistons 122 et 126.

De plus, une pièce de butée 90 s'appuie contre la paroi interne du boîtier du servomoteur. Elle permet au piston d'interdire à la douille de se déplacer vers l'avant.

On va maintenant décrire le fonctionnement du dispositif des figures 3 et 4.

Lorsque le système de freinage est au repos (c'est-à-dire que le conducteur n'appuie pas sur la pédale de frein), le système est tel que représenté par les figures 3 et 4.

Le ressort 16 repousse le piston pneumatique 12 vers l'arrière (vers la droite sur les figures 3 et 4). La face 13 de l'ouverture 14 du piston appuie sur la pièce 90 vers l'arrière et plaque cette pièce 90 contre le boîtier. Une partie de la pièce 90 est située dans une ouverture 55 de la douille 54. La pièce 90 appuie donc vers l'arrière sur le bord 56 de l'ouverture 55 de la douille. Celle-ci ne peut donc pas se déplacer vers l'avant (vers la gauche sur les figures 3 et 4).

Par ailleurs, la douille 54 est repoussée vers l'avant par le ressort 70 et plaque la douille 54 contre la pièce d'appui 90.

La pédale de frein étant au repos, la tige de commande 28 est repoussée vers l'arrière, de manière connue dans la technique, par le ressort 300. Le siège de clapet 50 repousse vers l'arrière le clapet 46 qui est décollé du siège de clapet d'équilibrage 48 porté par la douille 54. Cet espace entre le clapet 46 et le siège de clapet 48 met en communication la chambre avant 8 et la chambre arrière 10. Le clapet 46 est en appui sur le siège de clapet d'admission 50 et isole ainsi la chambre arrière 10 de la pression atmosphérique.

Au début d'une phase de freinage, lorsque le conducteur appuie sur la pédale de frein, la tige de commande 28 est déplacée axialement vers l'avant (vers la gauche sur les figures), le distributeur-plongeur 32 se déplace vers l'avant. Le siège de clapet 50 se déplace vers l'avant. Le clapet 46 se déplace également vers l'avant et est appliqué sur le siège de clapet d'équilibrage 48 porté par la douille 54. La chambre arrière 10 est isolée de la chambre avant 8. Le distributeur-plongeur se déplaçant vers l'avant, le siège de clapet d'admission 50 se décolle du clapet 46, autorisant une alimentation en air à pression atmosphérique dans la chambre arrière 10.

Du fait de la différence de pressions entre la chambre avant et la chambre arrière, la jupe 6 et le piston 12 sont déplacés vers l'avant.

Le piston 12 pousse le piston 122 du maître cylindre 120 vers l'avant. La pression augmente dans le maître cylindre. Cependant, la pression dans le maître cylindre a tendance à repousser le piston auxiliaire 126 vers l'arrière. Le piston 126 appuie vers l'arrière sur la face 74 de la douille 54 par l'intermédiaire de la rondelle 127, du ressort 128 et de la rondelle 129.

On prévoira avantageusement que la charge du ressort 70 est plus faible que celle du ressort 128.

Au fur et à mesure que le piston 12 se déplace vers l'avant, la pression dans le maître cylindre 120 augmente et le déplacement de la douille 54 vers l'arrière par rapport au piston augmente. Le siège de clapet 48 se rapproche du clapet 50.

Au fur et à mesure de l'augmentation de la pression dans le maître cylindre, on aura donc une augmentation du découplage de la pédale. Ce processus se poursuit jusqu'à ce que la face 71 de la douille ait parcouru la distance C (voir figure 4) qui la sépare de l'épaulement 72 du piston. Lorsque la face 71 est en contact avec l'épaulement 73, la douille est solidarisée au piston dans son déplacement vers l'avant.

Le clapet 46 vient en contact avec le siège de clapet d'admission 50 et interrompt l'alimentation en air à pression atmosphérique de la chambre arrière. Le conducteur doit alors enfoncer d'avantage la pédale de frein pour augmenter le niveau de freinage.

Le clapet 46 est alors en contact avec le siège de clapet d'équilibrage 48 de la douille 54 et avec le siège de clapet d'admission 50, interrompant l'alimentation en air à pression atmosphérique de la chambre arrière.

La course C (voir figure 4) représentée par la distance parcourue par la face 71 de la douille sera de préférence choisie de manière à ce qu'elle corresponde à la course morte du maître-cylindre, c'est-à-dire à la course nécessaire du piston hydraulique dans le maître-cylindre pour obtenir le début de la montée en pression du liquide de frein dans les freins.

Dans ces conditions, non seulement le conducteur ne ressent à la pédale que la course nécessaire à la fermeture du clapet d'équilibrage et à l'ouverture du clapet d'admission et ne ressent pas la course morte du maître-cylindre, mais de plus la transition entre ce fonctionnement et le freinage réel se fait de manière progressive.

Par la suite, lorsque le conducteur relâche la pédale de frein au moins en partie. Le distributeur plongeur 32 est entraîné avec la tige de commande vers l'arrière. Le siège de clapet d'admission 50 vient en contact avec le clapet 46 et emporte le clapet 46 en éloignement du siège d'équilibrage 48, mettant en communication la chambre avant 8 et la chambre arrière 10. Les pressions s'équilibrent alors de part et d'autre de la jupe 6 qui revient en position repos.

Comme on l'a mentionné précédemment la charge du ressort 128 est de préférence supérieure à celle du ressort 70.

La course C de la douille 54 dans le piston doit être réglée avec précision. C'est pourquoi, selon une variante de réalisation de l'invention, on peut prévoir une pièce de limitation de course 75 qui porte la face 71 d'appui du ressort 70. La position de cette pièce 75 est réglable axialement sur la douille 54.

## Revendications

1. Servomoteur d'assistance au freinage comportant:
- un boîtier (2) d'axe longitudinal (X)
- un ensemble jupe (6) et piston pneumatique (12) monté à coulissement étanche dans le boîtier (2) selon l'axe longitudinal (X), ledit ensemble jupe et piston (6,12) divisant l'espace intérieur (4) du boîtier (2) en une chambre avant à basse pression (8) et en une chambre arrière à pression variable (10),
- une vanne trois voies (26) actionnée par une tige de commande (28) montée dans un passage longitudinal (34) percé dans le piston pneumatique (12), ladite tige de commande (28) étant reliée par une première extrémité longitudinale à une pédale de frein,
- un distributeur-plongeur (32) mobile, dans ledit piston, selon ledit axe longitudinal (X) sous la commande d'une deuxième extrémité de ladite tige de commande (28), ledit distributeur plongeur (32) permettant d'appliquer l'effort de la tige de commande. (28) à un piston hydraulique (122) d'un maitre-cylindre, ledit ensemble jupe et piston (6,12) transmettant un effort d'assistance pneumatique au piston hydraulique (122) du maître-cylindre,
- une douille (54) montée à coulissement étanche dans le piston pneumatique (12) selon ledit axe longitudinal (X) sur une course déterminée (C),
ladite vanne trois voies (26) comportant un premier (48) et un deuxième (50) siège de clapet, ainsi qu'un clapet (46) destiné à être appliqué contre le premier et/ou le deuxième siège de clapet (48, 50), ledit deuxième siège de clapet (50) étant porté par une première extrémité longitudinale du distributeur-plongeur (32), le premier siège de clapet étant porté par une première extrémité longitudinale de ladite douille (54), **caractérisé en ce qu'**il comporte également:
- un dispositif élastique (70) prenant appui d'une part sur une face avant (72) du piston (12) et, d'autre part sur un épaulement (71) de la douille (54) et ayant pour action de tendre à exercer sur la douille un effort vers l'avant par rapport au piston,
- un dispositif de transmission de la pression du maître cylindre (120) à la douille (54) ayant pour action de tendre à exercer sur la douille (54) un effort vers l'arrière.

2. Servomoteur d'assistance au freinage selon la revendication 1, **caractérisé en ce que** le dispositif de transmission de la pression du maître cylindre (120) comporte un piston auxiliaire (126) coaxial avec le piston primaire (122) du maître cylindre.

3. Servomoteur d'assistance au freinage selon la revendication 2, **caractérisé en ce que** le dispositif élastique comporte un premier ressort de compression (70).

4. Servomoteur d'assistance au freinage selon la revendication 3, **caractérisé en ce que** le dispositif de transmission de la pression du maître cylindre comporte un deuxième ressort (128).

5. Servomoteur d'assistance au freinage selon la revendication 4, **caractérisé en ce que** le deuxième ressort (128) est compris entre une première rondelle (127) prenant appui sur un épaulement du piston auxiliaire (126) et une deuxième rondelle (129) prenant appui sur un épaulement avant (74) de la douille (54).

6. Servomoteur d'assistance au freinage selon la revendication 5, **caractérisé en ce que** le piston pneumatique (12) comporte un épaulement de butée (73) et **en ce que** la douille (54) comporte une pièce de limitation de course (71, 75) destinée à venir en butée contre ledit épaulement de butée (73) pour limiter le déplacement de la douille à l'intérieur du piston (12) du servomoteur.

7. Servomoteur d'assistance au freinage selon la revendication 6, **caractérisé en ce que** la distance entre l'épaulement de butée (73) et la pièce de limitation de course (71), lorsque le servomoteur est au repos, correspond sensiblement à la course morte du maître cylindre.

8. servomoteur d'assistance au freinage selon la revendication 7, **caractérisé en ce que** la position de la pièce de limitation de course (75) sur la douille (54) est réglable axialement.

9. Servomoteur d'assistance au freinage selon la revendication 6, **caractérisé en ce qu'**il comporte une pièce d'appui (90) prenant appui sur le boîtier du servomoteur et possédant une première partie qui pénètre dans une ouverture (14) du piston (12) du servomoteur et sur laquelle le piston est destiné à s'appuyer, et une deuxième partie qui pénètre dans une ouverture (55) de la douille (54) et destinée à limiter le déplacement vers l'avant de la douille lorsque le servomoteur est au repos.

10. Servomoteur d'assistance au freinage selon la revendication 5, **caractérisé en ce que** la charge du premier ressort (70) est plus faible que la charge du deuxième ressort (128).

## Claims

1. Brake booster comprising:
- a casing (2) of longitudinal axis (X),
- a skirt (6) and pneumatic piston (12) assembly mounted such that it can slide in a sealed manner in the casing (2) along the longitudinal axis (X), said skirt-piston assembly (6,12) dividing the interior space (4) of the casing (2) into a low-pressure front chamber (8) and a variable-pressure rear chamber (10),
- a three-way valve (26) actuated by a control rod (28) mounted in a longitudinal passage (34) pierced in the pneumatic piston (12), said control rod (28) being connected via a first longitudinal end to a brake pedal,
- a slide valve plunger (32) able to move, in said piston, along said longitudinal axis (X) under the control of a second end of said control rod (28), said slide valve plunger (32) allowing the force of the control rod (28) to be applied to a hydraulic piston (122) of a master cylinder, said skirt-piston assembly (6,12) transmitting a pneumatic boost force to the hydraulic piston (122) of the master cylinder,
- a sleeve (54) mounted such that it can slide in a sealed manner in the pneumatic piston (12) along said longitudinal axis (X) over a determined travel (C),
said three-way valve (26) comprising a first (48) and a second (50) valve seat, and a valve shutter (46) intended to be pressed against the first and/or the second valve seat (48,50), said second valve seat (50) being borne by a first longitudinal end of the slide valve plunger (32), the first valve seat being borne by a first longitudinal end of said sleeve (54), **characterized in that** it also comprises:
- an elastic device (70) bearing, on the one hand, against a front face (72) of the piston (12) and, on the other hand, against a shoulder (71) of the sleeve (54) and having a tendency to apply a forward force on the sleeve relative to the piston,
- a device for transmitting the pressure of the master cylinder (120) to the sleeve (54) and tending to apply a rearward force to the sleeve (54).

2. Brake booster according to Claim 1, **characterized in that** the device for transmitting the pressure of the master cylinder (120) comprises an auxiliary piston (126) coaxial with the primary piston (122) of the master cylinder.

3. Brake booster according to Claim 2, **characterized in that** the elastic device comprises a first compression spring (70).

4. Brake booster according to Claim 3, **characterized in that** the device for transmitting the pressure of the master cylinder comprises a second spring (128).

5. Brake booster according to Claim 4, **characterized in that** the second spring (128) is contained between a first washer (127) that bears against a shoulder of the auxiliary piston (126) and a second washer (129) that bears against a front shoulder (74) of the sleeve (54).

6. Brake booster according to Claim 5, **characterized in that** the pneumatic piston (12) comprises an end-stop shoulder (73) and **in that** the sleeve (54) comprises a travel-limiting component (71,75) intended to butt against said end-stop shoulder (73) to limit the movement of the sleeve inside the piston (12) of the booster.

7. Brake booster according to Claim 6, **characterized in that** the distance between the end-stop shoulder (73) and the travel-limiting component (71) corresponds more or less to the dead travel of the master cylinder when the booster is at rest.

8. Brake booster according to Claim 7, **characterized in that** the position of the travel-limiting component (75) on the sleeve (54) is axially adjustable.

9. Brake booster according to Claim 6, **characterized in that** it comprises a bearing piece (90) bearing against the casing of the booster and having a first part that enters an opening (14) in the piston (12) of the booster and against which the piston is intended to press, and a second part which enters an opening (55) in the sleeve (54) and is intended to limit the forward movement of the sleeve when the booster is at rest.

10. Brake booster according to Claim 5, **characterized in that** the load of the first spring (70) is lower than the load of the second spring (128).

## Patentansprüche

1. Servomotor zur Bremsunterstützung, mit:
- einem Gehäuse (2) mit einer Längsachse (X),
- einer aus einer Schürze (6) und einem pneumatischen Kolben (12) bestehenden Baugruppe, die so angebracht ist, dass sie in dichter Weise entlang der Längsachse (X) in dem Gehäuse (2) gleitet, wobei die aus Schürze und Kolben (6, 12) bestehende Baugruppe den Innenraum (4) des Gehäuses (2) in eine vordere Kammer (8) mit niedrigem Druck und eine hintere Kammer (10) mit variablem Druck unterteilt,
- einem Dreiwegeventil (26), das von einer Steuerstange (28) betätigt wird, die in einem im pneumatischen Kolben (12) ausgebildeten Längsdurchgang (34) angebracht ist, wobei die Steuerstange (28) über ein erstes Längsende mit einem Bremspedal verbunden ist,
- einem Verteilertauchkolben (32), der durch eine Betätigung durch ein zweites Ende der Steuerstange (28) im Kolben entlang der Längsachse (X) beweglich ist, wobei der Verteilertauchkolben (32) das Aufbringen der Kraft der Steuerstange (28) auf einen hydraulischen Kolben (122) eines Hauptzylinders ermöglicht, wobei die aus Schürze und Kolben (6, 12) bestehende Baugruppe eine pneumatische Unterstützungskraft zum hydraulischen Kolben (122) des Hauptzylinders überträgt,
- einer Hülse (54), die so angebracht ist, dass sie über einen vorbestimmten Weg (C) entlang der Längsachse (X) in dichter Weise im pneumatischen Kolben (12) gleitet,
wobei das Dreiwegeventil (26) einen ersten (48) und einen zweiten Ventilelementsitz (50) und ein Ventilelement (46) aufweist, das dazu vorgesehen ist, an den ersten und/oder den zweiten Ventilelementsitz (48, 50) in Anlage gebracht zu werden, wobei der zweite Ventilelementsitz (50) an einem ersten Längsende des Verteilertauchkolbens (32) vorgesehen ist und der erste Ventilelementsitz an einem ersten Längsende der Hülse (54) vorgesehen ist, **dadurch gekennzeichnet, dass** er ferner Folgendes aufweist:
- eine elastische Vorrichtung (70), die sich einerseits an einer vorderen Fläche (72) des Kolbens (12) und andererseits an einer Schulter (71) der Hülse (54) abstützt und deren Wirkung darin besteht, dazu zu neigen, eine in Bezug auf den Kolben nach vorne gerichtete Kraft auf die Hülse auszuüben,
- eine Vorrichtung zur Übertragung des Drucks des Hauptzylinders (120) zur Hülse (54), deren Wirkung darin besteht, dazu zu neigen, eine nach hinten gerichtete Kraft auf die Hülse (54) auszuüben.

2. Servomotor zur Bremsunterstützung nach Anspruch 1, **dadurch gekennzeichnet, dass** die Vorrichtung zur Übertragung des Drucks des Hauptzylinders (120) einen Hilfskolben (126) aufweist, der koaxial zum Primärkolben (122) des Hauptzylinders verläuft.

3. Servomotor zur Bremsunterstützung nach Anspruch 2, **dadurch gekennzeichnet, dass** die elastische Vorrichtung eine erste Druckfeder (70) aufweist.

4. Servomotor zur Bremsunterstützung nach Anspruch 3, **dadurch gekennzeichnet, dass** die Vorrichtung zur Übertragung des Drucks des Hauptzylinders eine zweite Feder (128) aufweist.

5. Servomotor zur Bremsunterstützung nach Anspruch 4, **dadurch gekennzeichnet, dass** die zweite Feder (128) zwischen einer ersten Scheibe (127), die sich an einer Schulter des Hilfskolbens (126) abstützt, und einer zweiten Scheibe (129), die sich an einer vorderen Schulter (74) der Hülse (54) abstützt, vorgesehen ist.

6. Servomotor zur Bremsunterstützung nach Anspruch 5, **dadurch gekennzeichnet, dass** der pneumatische Kolben (12) eine Anschlagschulter (73) aufweist und die Hülse (54) ein Teil (71, 75) zur Wegbegrenzung aufweist, das dazu vorgesehen ist, an die Anschlagschulter (73) in Anschlag zu gelangen, um die Verlagerung der Hülse im Kolben (12) des Servomotors zu begrenzen.

7. Servomotor zur Bremsunterstützung nach Anspruch 6, **dadurch gekennzeichnet, dass** der Abstand zwischen der Anschlagschulter (73) und dem Wegbegrenzungsteil (71) in der Ruhestellung des Servomotors im Wesentlichen dem Totgang des Hauptzylinders entspricht.

8. Servomotor zur Bremsunterstützung nach Anspruch 7, **dadurch gekennzeichnet, dass** die Stellung des Wegbegrenzungsteils (75) auf der Hülse (54) axial einstellbar ist.

9. Servomotor zur Bremsunterstützung nach Anspruch 6, **dadurch gekennzeichnet, dass** er ein Anlageteil (90) aufweist, das sich am Gehäuse des Servomotors abstützt und einen ersten Abschnitt aufweist, der in eine Öffnung (14) des Kolbens (12) des Servomotors dringt und an dem sich der Kolben abstützen soll, sowie einen zweiten Abschnitt, der in eine Öffnung (55) der Hülse (54) dringt und dazu vorgesehen ist, die Verlagerung der Hülse nach vorne zu begrenzen, wenn sich der Servomotor in der Ruhestellung befindet.

10. Servomotor zur Bremsunterstützung nach Anspruch 5, **dadurch gekennzeichnet, dass** die Last der ersten Feder (70) geringer ist als die Last der zweiten Feder (128).
